# EUROPÄISCHE PATENTSCHRIFT

(11) **EP 3 572 293 B1**
(45) Veröffentlichungstag und Bekanntmachung des Hinweises auf die Patenterteilung: **11.01.2023**
(21) Anmeldenummer: 19170734.8
(22) Anmeldetag: 24.04.2019
(51) Int. Cl.: H04W 4/44, G08G 1/01, B60W 30/09, B60W 30/18, B60W 50/14, G06V 20/58, B60W 30/095, G08G 1/16, B60W 40/08

(54) **VERFAHREN ZUM UNTERSTÜTZEN EINES FÜHRENS WENIGSTENS EINES KRAFTFAHRZEUGS UND ASSISTENZSYSTEM**
METHOD FOR ASSISTING DRIVING OF AT LEAST ONE MOTOR VEHICLE AND ASSISTANCE SYSTEM
PROCÉDÉ D'AIDE À LA CONDUITE D'AU MOINS UN VÉHICULE AUTOMOBILE ET SYSTÈME D'ASSISTANCE

(30) Priorität: 23.05.2018 DE 102018208105
(43) Veröffentlichungstag der Anmeldung: 27.11.2019
(73) Patentinhaber: VOLKSWAGEN AKTIENGESELLSCHAFT, 38440 Wolfsburg (DE)
(72) Erfinder: Max, Stephan, 38518 Gifhorn (DE); Günzel, Thorben, 38118 Braunschweig (DE); Klomp, Sven, 31311 Uetze / Dollbergen (DE)

(56) Entgegenhaltungen:
- US-A1- 2016 161 270
- US-A1- 2016 161 271
- US-A1- 2017 158 193
- US-A1- 2017 337 819
- US-B1- 9 459 623

## Beschreibung

Die Erfindung betrifft ein Verfahren zum Unterstützen eines Führens mindestens eines Kraftfahrzeugs, ein entsprechendes Assistenzsystem für ein Kraftfahrzeug und ein Kraftfahrzeug mit einem derartigen Assistenzsystem.

Um ein Kraftfahrzeug sicher im Verkehrsgeschehen bewegen zu können, ist es unerlässlich, eine jeweilige Verkehrssituation zu verstehen. Dies bedeutet, dass für die jeweilige Verkehrssituation relevante Verkehrsregeln bekannt sein müssen. Dies gilt sowohl für menschliche Fahrer des Kraftfahrzeugs als auch für automatische Einrichtungen, welche das Kraftfahrzeug in einem autonomen Fahrbetrieb führen, also Steuern. Zum Unterstützen des jeweiligen Fahrers ebenso wie zum Ermöglichen des autonomen Fahrbetriebs können heutzutage beispielsweise Verkehrszeichen automatisch erkannt werden. Problematisch dabei ist es jedoch, dass dies nicht immer zuverlässig möglich ist, da die Verkehrszeichen beispielsweise durch andere Verkehrsteilnehmer oder sonstige Hindernisse verdeckt, durch Verschmutzung oder Beschädigung unleserlich sein oder sogar gänzlich fehlen können.

Die DE 10 2011 082 761 A1 beschreibt ein computerimplementiertes Verfahren. Dabei wird bestimmt, dass eine Fahrzeugfahrcharakteristik einen erwarteten Parameter überschritten hat und daraufhin eine Aufzeichnung von Fahrzeug-GPS-Koordinaten abgebrochen, wenn eine Abbruchtoleranz überschritten ist. Abhängig von einer vorbestimmten Anzahl an aufgezeichneten Fahrzeug-GPS-Koordinaten wird ein Verkehrssteuermerkmal bestimmt und gespeichert, das zumindest mit einem Satz der GPS-Koordinaten verbunden ist.

Die DE 10 2012 219 721 A1 offenbart ein Fahrassistenzverfahren zur Erhöhung des Fahrkomforts, wobei ein Zustand eines zu befahrenen Streckenabschnitts und Fahrspuren dieses Streckenabschnitts erfasst werden und eine Fahrspurempfehlung für den Streckenabschnitt abgegeben wird. Beispielsweise kann als Fahrspurempfehlung die Nachricht ausgegeben werden, dass aufgrund von Schlaglöchern in 500 m Entfernung ein Spurwechsel empfohlen wird.

Aus der DE 10 2011 082 375 A1 ist ein Verfahren zum Entlasten eines Fahrers beim Führen eines Fahrzeugs bekannt. Dabei führt der Fahrer eine Anfrage an eine Steuerung durch, ob die Steuerung mindestens eine Teilfunktion des Führens des Fahrzeugs übernehmen kann. Nach einer entsprechenden Überprüfung übernimmt die Steuerung die Führung der Teilfunktion des Fahrzeugs, wenn ein festgelegter Parameter erfüllt ist. Die Steuerung kann die Führung der Teilfunktion dann übernehmen, wenn die Überprüfung ergeben hat, dass kein Stau, keine Baustelle, keine Kreuzungen, keine Einmündung, keine Abzweigung und keine besonderen Gefahrensituationen vorliegen oder auftreten können.

Die US 2017/0158193 A1 zeigt ein Verfahren für ein autonom betriebenes Kraftfahrzeug, gemäß dem das Kraftfahrzeug eine Kreuzung autonom überqueren kann. Hierbei wird unterschieden, ob die Vorfahrt an der Kreuzung mittels einer Ampelanlage, einer Beschilderung oder nach der Rechts-vor-Links-Regel geregelt wird.

Außerdem werden andere Verkehrsteilnehmer und Fußgänger in einem Bereich der Kreuzung von dem Kraftfahrzeug erfasst und berücksichtigt.

Aufgabe der vorliegenden Erfindung ist es, ein sicheres und zuverlässiges Führen eines Kraftfahrzeugs zu ermöglichen.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Ansprüchen, der nachfolgenden Beschreibung und den Zeichnungen angegeben.

Ein erfindungsgemäßes Verfahren dient zum Unterstützen eines Führens wenigstens eines Kraftfahrzeugs. Bei dem erfindungsgemäßen Verfahren werden mittels einer jeweiligen Umgebungssensorik einer Vielzahl von Kraftfahrzeugen jeweilige Umgebungsdaten erfasst, die eine jeweilige umgebende Verkehrssituation charakterisieren. Mit anderen Worten weist also jedes der Kraftfahrzeuge eine eigene Umgebungssensorik auf, die die Umgebung des jeweiligen Kraftfahrzeugs erfasst. Die Umgebungssensorik kann beispielsweise eine oder mehrere Kameras und/oder weitere Sensoren, beispielsweise Radar-, Lidar- und/oder Lasersensoren mit jeweiligen Sende- und Empfangseinrichtungen, umfassen. Erfindungsgemäß ist es vorgesehen, dass die Umgebungsdaten automatisch in Bereichen erfasst werden, in denen eine jeweilige von dem jeweiligen Kraftfahrzeug befahrene erste Straße und eine jeweilige zweite Straße, auf der sich ein jeweiliger anderer Verkehrsteilnehmer befindet, zusammentreffen. Aus den erfassten Umgebungsdaten für die Bereiche wird dann automatisch als ein jeweiliges Vorfahrtsverhalten bestimmt, ob das jeweilige Kraftfahrzeug dem jeweiligen anderen Verkehrsteilnehmer Vorfahrt gewährt oder gewährt hat, sodass der jeweilige andere Verkehrsteilnehmer den jeweiligen Bereich vor dem jeweiligen Kraftfahrzeug durchquert beziehungsweise durchquert hat, oder umgekehrt. Es wird also ein Verhalten der Verkehrsteilnehmer, die in dem jeweiligen Bereich aufeinandertreffen bezüglich eines Gewährens oder einer Inanspruchnahme einer Vorfahrt bestimmt. Das Vorfahrtsverhalten gibt also an, wie die jeweiligen beteiligten Verkehrsteilnehmer in der jeweiligen Verkehrssituation reagieren beziehungsweise reagiert haben. Aus der Vielzahl von bestimmten Vorfahrtsverhalten werden automatisch Vorfahrtsregeln für die Bereiche bestimmt. Erfindungsgemäß werden die bestimmten Vorfahrtsregeln dann in dem wenigstens einen zu führenden Kraftfahrzeug bereitgestellt.

Es wird also in einer Vielzahl von Einzelfällen jeweils bestimmt, welcher von wenigstens zwei Verkehrsteilnehmern, die gleichzeitig in einem Kreuzungs- oder Einmündungsbereich eintreffen, also aufeinandertreffen, zuerst fährt oder geht und welcher der wenigstens zwei aufeinandertreffenden Verkehrsteilnehmer den jeweils anderen zuerst fahren oder gehen lässt. Die Vielzahl der Kraftfahrzeuge, die dies durchführen, also die entsprechenden Umgebungsdaten erfassen, können dabei jeweils und insgesamt einen oder mehrere Bereiche beziehungsweise entsprechende Verkehrssituationen erfassen. Insbesondere kann ein bestimmter Bereich mehrfach, beispielsweise zu unterschiedlichen Zeiten und damit insbesondere in unterschiedlichen Verkehrssituationen, von demselben Kraftfahrzeug und/oder von unterschiedlichen der Kraftfahrzeuge befahren und entsprechend erfasst werden. Das Erfassen des Bereiches ist hier gleichzusetzen mit dem Erfassen der Umgebungsdaten für diesen Bereich oder in diesem Bereich.

Die Vielzahl der Kraftfahrzeuge agieren unabhängig voneinander, aber werden dennoch zusammenfassend als Flotte oder Schwarm bezeichnet. Die von diesen Kraftfahrzeugen der Flotte oder des Schwarms jeweils individuell erfassten Umgebungsdaten und/oder die daraus bestimmten Vorfahrtsverhalten können zusammengefasst, also insgesamt, entsprechend als Schwarmdaten bezeichnet werden. Die Vorfahrtsregeln werden also nicht anhand eines Einzelfalles oder einer Einzelsituation bestimmt, sondern aus den oder anhand der Schwarmdaten. Dadurch können vorteilhaft Einmal- oder Sondersituationen, in denen sich das jeweilige Kraftfahrzeug und/oder der jeweilige andere Verkehrsteilnehmer regelwidrig verhalten, nicht dazu führen, dass eine falsche Vorfahrtsregel für den jeweiligen Bereich bestimmt wird. Es ist dabei eine Erkenntnis der Erfindung, dass sich die meisten Verkehrsteilnehmer in den meisten Situationen regelkonform, also im Einklang mit gesetzlichen Verkehrsregeln, erhalten.

Durch die derartige Verwendung der Schwarmdaten, die von regulären Kraftfahrzeugen erfasst werden, kann vorteilhaft für eine Vielzahl von Bereichen, also Kreuzungen und Einmündungen, eine jeweilige dort gültige oder zutreffende Vorfahrtsregel bestimmt werden, ohne dass hierfür beispielsweise jeder dieser Bereiche gezielt und spezifisch zum Ermitteln der jeweiligen Vorfahrtsregel von einem entsprechenden Fachpersonal angefahren werden müsste. Damit kann vorteilhaft automatisiert und mit besonders geringem Aufwand eine flächendeckende Bestimmung der Vorfahrtsregeln erreicht werden. Diese bestimmten Vorfahrtsregeln können für verschiedene Anwendungszwecke nutzbringend verwendet werden, wie etwa das regelbasierte Führen des Kraftfahrzeugs, eine Erstellung von Karten oder Datensätzen, eine statistische Auswertung, und dergleichen mehr.

Da zudem das tatsächliche Verhalten der Kraftfahrzeuge und der anderen Verkehrsteilnehmer, also ein tatsächlicher Verkehrsfluss, in den jeweiligen Bereichen erfasst wird, insbesondere als Grundlage zum Bestimmen der Vorfahrtsregeln verwendet wird, ist das erfindungsgemäße Verfahren vorteilhaft nicht auf eine automatisch erkennbare oder auch nur vorhandene Beschilderung oder Straßenausstattung in den jeweiligen Bereichen angewiesen. Damit kann vorteilhaft der Umstand technisch ausgenutzt werden, dass selbst bei fehlender oder unvollständiger oder beispielsweise beschädigter Beschilderung oder Straßenausstattung menschliche Fahrer die jeweilige Verkehrssituation und die vorschriftsmäßig gültige und anzuwendende Vorfahrtsregel im Allgemeinen zuverlässig erkennen oder einschätzen können, zumindest mehrheitlich oder im Durchschnitt.

Der Begriff Straße ist im Sinne der vorliegenden Erfindung allgemein auszulegen und kann jegliche Art von Verkehrsweg meinen oder umfassen. Die Erfindung gilt, ist also anwendbar, beispielsweise auch für Bereiche oder Verkehrssituationen, in denen ein unbefestigter Wald- oder Feldweg auf eine Straße im eigentlichen Sinne trifft. Ebenso kann beispielsweise die erste oder die zweite Straße eine Einfahrt oder Ausfahrt eines abgegrenzten Geländes, beispielsweise eines Privatgrundstücks sein.

Bevorzugt kann es vorgesehen sein, dass eine Vorfahrtsregel für einen Bereich erst dann bestimmt wird, wenn für diesen Bereich wenigstens eine vorgegebene Anzahl von bestimmten Vorfahrtsverhalten vorliegt, also bestimmt worden ist. Ebenso kann die Vorfahrtsregel für einen Bereich beispielsweise mit jedem für diesen Bereich bestimmten Vorfahrtsverhalten neu bestimmt, aktualisiert, angepasst und/oder überprüft werden. Bevorzugt kann die Vorfahrtsregel erst dann in dem wenigstens einen zu führenden Kraftfahrzeug bereitgestellt werden, wenn ein vorgegebener Konfidenzwert für die jeweilige Vorfahrtsregel erreicht ist. Dies kann beispielsweise dann der Fall sein, wenn die Vorfahrtsregel aus wenigstens der vorgegebenen Anzahl von bestimmten Vorfahrtsverhalten bestimmt wurde, also auf wenigstens einer vorgegebenen Anzahl von bestimmten Vorfahrtsverhalten basiert. Ebenso kann vorteilhaft beispielsweise eine Streubreite oder Varianz der Vorfahrtsverhalten berücksichtigt werden. Der Konfidenzwert kann dann beispielsweise erreicht sein, wenn ein beliebiges Vorfahrtsverhalten, welches zusätzlich berücksichtigt wird, weniger als einen vorgegebenen Einfluss auf die resultierende Vorfahrtsregel hat. Auf diese Weise kann vorteilhaft die Sicherheit und Zuverlässigkeit der bestimmten Vorfahrtsregeln und des Führens des Kraftfahrzeugs, also die Sicherheit im Verkehrsgeschehen erhöht werden.

Das wenigstens eine zu führende Kraftfahrzeug, also dasjenige Kraftfahrzeug, dessen Führen oder Führung durch Bereitstellen der bestimmten Vorfahrtsregel oder Vorfahrtsregeln unterstützt wird, werden kann oder werden soll, kann eines der Vielzahl der Kraftfahrzeuge sein, welche die Umgebungsdaten erfassen. Dies ist jedoch nicht notwendigerweise der Fall. Mit anderen Worten können vorteilhaft auch solche Kraftfahrzeuge durch die basierend auf den Schwarmdaten bestimmten Vorfahrtsregeln unterstützt werden, welche nicht selbst zum Erfassen der Umgebungsdaten oder zum Bestimmen des jeweiligen Vorfahrtsverhaltens und/oder zum Übermitteln der Umgebungsdaten und/oder des jeweiligen Vorfahrtsverhaltens an eine entsprechende Datenverarbeitungseinrichtung ausgebildet oder eingerichtet sind. Ebenso können die bestimmten Vorfahrtsregeln aber einem, mehreren oder allen der Vielzahl der Kraftfahrzeuge, also den Flotten- oder Schwarmfahrzeugen, bereitgestellt werden.

Die Umgebungsdaten können in bevorzugter Ausführungsform der Erfindung jeweils in dem Kraftfahrzeug, welches die jeweiligen Umgebungsdaten erfasst hat, mittels einer jeweiligen lokalen Datenverarbeitungseinrichtung des Kraftfahrzeugs zum Bestimmen der Vorfahrtsregeln verarbeitet werden. Die jeweiligen Vorfahrtsverhalten können also beispielsweise durch jeweilige Assistenzsysteme oder Datenverarbeitungseinrichtungen eines, einiger oder aller der Kraftfahrzeuge jeweils lokal bestimmt werden. Dadurch stehen die Vorfahrtsregeln vorteilhaft direkt und unmittelbar zur Nutzung, also zum Führen des jeweiligen Kraftfahrzeugs bereit. Die erfassten Umgebungsdaten und/oder die daraus bestimmten Vorfahrtsverhalten können ebenso beispielsweise direkt von Kraftfahrzeug zu Kraftfahrzeug übermittelt oder ausgetauscht werden, beispielsweise mittels Car-2-Car Kommunikation. Ebenso kann das Übermitteln oder Austauschen der Umgebungsdaten und/oder der Vorfahrtsverhalten zwischen den einzelnen Kraftfahrzeugen unter Vermittlung einer fahrzeugexternen Servereinrichtung durchgeführt werden. Auf Basis der dann in einem oder mehreren der Kraftfahrzeuge verfügbaren Datenbasis aus von mehreren, also der Vielzahl von Kraftfahrzeugen erfassten Umgebungsdaten und/oder der von der Vielzahl von Kraftfahrzeugen bestimmten Vorfahrtsverhalten kann dann in einem, mehreren oder allen der Kraftfahrzeuge, beispielsweise mittels des jeweiligen Assistenzsystems oder der jeweiligen Datenverarbeitungseinrichtung die jeweilige Vorfahrtsregel beziehungsweise die Vorfahrtsregeln bestimmt werden.

Ebenso können die erfassten Umgebungsdaten zum Bestimmen der Vorfahrtsverhalten an die fahrzeugexterne Servereinrichtung übermittelt werden, welche dann auch die Vorfahrtsregeln bestimmt.

In vorteilhafter Ausgestaltung der vorliegenden Erfindung werden die Umgebungsdaten und/oder die bestimmten Vorfahrtsverhalten von den Kraftfahrzeugen automatisch an eine, insbesondere fahrzeugexterne, zentrale Servereinrichtung - etwa einen Cloud- oder Backend-Server - übermittelt. Diese zentrale Servereinrichtung bestimmt daraus automatisch die Vorfahrtsregeln. Insbesondere kann die zentrale Servereinrichtung die bestimmten Vorfahrtsregeln automatisch an das wenigstens eine zu führende Kraftfahrzeug, insbesondere an die Vielzahl der Kraftfahrzeuge, übermitteln. Mit anderen Worten werden also Daten von vielen unterschiedlichen Kraftfahrzeugen, welche insbesondere in unterschiedlichen, räumlich verteilt angeordneten Kreuzungs- und/oder Einmündungsbereiche erfasst worden sind oder für diese gelten, an zentraler Stelle verarbeitet. Dadurch können die Vorfahrtsregeln besonders schnell und zuverlässig, mit besonders geringem Kommunikationsoverhead, also besonders effizient und für ein besonders großes räumliches Gebiet bestimmt werden. Dazu können vorteilhaft ebenso erfasste Eigenbewegungen des jeweiligen Kraftfahrzeugs und/oder erfasste Bewegungen der jeweiligen anderen Verkehrsteilnehmer und/oder eine jeweilige erfasste Straßenausstattung und/oder dergleichen mehr an die zentrale Servereinrichtung übermittelt werden. Diese Aspekte werden weiter unten genauer erläutert. Die zentrale Servereinrichtung ermöglicht dabei vorteilhaft zudem, dass die automatisch bestimmten Vorfahrtsregeln an zentraler Stelle besonders einfach überprüft werden können, ehe diese zum Unterstützen des Führens des wenigstens einen Kraftfahrzeugs diesem übermittelt beziehungsweise bereitgestellt werden. Dadurch kann eine verbesserte Sicherheit erreicht werden. Die Vorfahrtsverhalten können also lokal in den einzelnen Kraftfahrzeugen bestimmt und dann an die fahrzeugexterne Servereinrichtung übermittelt werden, welche daraus die Vorfahrtsregeln bestimmt. Durch das Bestimmen des Vorfahrtsverhaltens und/oder der Verkehrsregeln im jeweiligen Kraftfahrzeug erhöht sich zwar dort ein lokaler Datenverarbeitungs- oder Berechnungsaufwand, es kann vorteilhaft jedoch Bandbreite oder Datenvolumen für eine Datenübermittlung an die Servereinrichtung eingespart werden. Durch das Bestimmen oder Berechnen der Vorfahrtsverhalten und/oder der Vorfahrtsregeln durch die Servereinrichtung kann hingegen beispielsweise eine verbesserte Berechnungseffizienz und eine besonders einfache Überprüfbarkeit oder Absicherung jeweiliger Ergebnisse erreicht werden.

Als Beispiel kann das Kraftfahrzeug etwa auf einer Straße fahrend in einen Bereich gelangen, indem von rechts eine zweite Straße einmündet. Mittels der Umgebungssensorik kann das Kraftfahrzeug dann erfassen, dass sich auf der zweiten Straße ein anderer Verkehrsteilnehmer, beispielsweise ein anderes Kraftfahrzeug, befindet, welches sich ebenfalls diesem Einmündungsbereich nähert. Durch Verarbeiten der Umgebungsdaten und durch Berücksichtigen der Position und Bewegung des eigenen Kraftfahrzeugs kann dann beispielsweise ermittelt werden, dass das eigene Kraftfahrzeug vor der Einmündung der zweiten Straße anhält und der andere Verkehrsteilnehmer den Einmündungsbereich zuerst durchfährt. Diese oder eine ähnliche Verkehrssituation kann von mehreren der Vielzahl der Kraftfahrzeuge durchlaufen werden. Ebenso kann beispielsweise der andere Verkehrsteilnehmer eines der Vielzahl der Kraftfahrzeuge sein und somit dieselbe Verkehrssituation in demselben Bereich aus einer anderen Perspektive erfassen. Sind für diesen Bereich dann mehrere Sätze von Umgebungsdaten erfasst und verarbeitet beziehungsweise ausgewertet worden, so kann aus deren Gesamtheit für diesen Bereich abgeleitet oder ermittelt werden, dass aus Sicht des Kraftfahrzeugs die Vorfahrtsregel "rechts vor links" gilt. Dies kann somit auch dann ermittelt werden, wenn kein entsprechendes Verkehrszeichen in diesem Bereich vorhanden ist. Für die menschlichen Fahrer des Kraftfahrzeugs und des anderen, auf der zweiten Straße fahrenden Kraftfahrzeugs, also den anderen Verkehrsteilnehmer, kann diese Regel für diesen Bereich jedoch auch ohne entsprechende Beschilderung ersichtlich sein. Nachdem diese Regel also für diesen Bereich automatisch bestimmt worden ist, kann sie im Folgenden zum automatischen, sicheren und korrekten Führen von autonomen Kraftfahrzeugen in diesem Bereich oder durch diesen Bereich verwendet werden. Zusätzlich oder alternativ kann der Fahrer des zu führenden Kraftfahrzeugs beispielsweise durch ein Anzeigen der bestimmten Vorfahrtsregel oder durch einen entsprechenden optischen und/oder akustischen Hinweis oder eine Warnung beim Führen des Kraftfahrzeugs unterstützt werden, wenn er in Zukunft in einen Bereich gelangt, für den bereits eine Vorfahrtsregel bestimmt worden ist.

In vorteilhafter Ausgestaltung der vorliegenden Erfindung werden zum Bestimmen des jeweiligen Vorfahrtsverhaltens jeweils eine Eigenbewegung des jeweiligen Kraftfahrzeugs und eine Bewegung des jeweiligen anderen Verkehrsteilnehmers in dem jeweiligen Bereich erfasst und nachverfolgt. Mit anderen Worten wird also nicht lediglich eine statische oder momentane Situation erfasst, sondern deren zeitliche Entwicklung, also eine dynamische Verkehrssituation.

Mit anderen Worten wird also ein Verkehrsfluss in dem jeweiligen Bereich oder durch den jeweiligen Bereich erfasst beziehungsweise aus den Umgebungsdaten bestimmt. Als Bewegung in diesem Sinne ist dabei ein Bewegungszustand zu verstehen, was auch einschließt, einen Stillstehen oder einen Stillstand des Kraftfahrzeugs und/oder des anderen Verkehrsteilnehmers zu bestimmen. Es wird also als Teil der jeweiligen Verkehrssituation mittels der jeweiligen Umfeld- oder Umgebungssensorik eine jeweilige Relativbewegung erfasst zwischen dem jeweiligen Kraftfahrzeug und dem jeweils wenigstens einen anderen Verkehrsteilnehmer, insbesondere mehreren oder allen in dem jeweiligen Bereich befindlichen Verkehrsteilnehmer. Anhand der erfassten Eigenbewegung des Kraftfahrzeugs und der Bewegung des anderen Verkehrsteilnehmers kann also bestimmt werden, ob das Kraftfahrzeug den jeweiligen Bereich zuerst durchquert oder durchfährt oder ob der andere Verkehrsteilnehmer vor dem jeweiligen Kraftfahrzeug den jeweiligen Bereich zuerst durchfährt oder durchquert, also das jeweilige Vorfahrtsverhalten für den jeweiligen Bereich. Die Eigenbewegung des Kraftfahrzeugs kann durch entsprechende fahrzeugeigene Sensoren, Feedbacksysteme, Steuereinrichtungen und/oder dergleichen automatisch bestimmt werden. Beispielsweise kann eine Motorsteuerung, eine Getriebestellung, ein Tachometer, wenigstens einen Radencoder, einen Lenkwinkel und/oder dergleichen mehr überwacht und entsprechend ausgewertet werden. Die Bewegung des jeweiligen anderen Verkehrsteilnehmers kann als Teil der Umgebungsdaten erfasst werden. Zum Nachverfolgen der Bewegung des anderen Verkehrsteilnehmers können die Umgebungsdaten insbesondere kontinuierlich oder, beispielsweise je nach technischer Ausführung, mit einer Frequenz von beispielsweise wenigstens 10 Hz erfasst werden. Auf diese Weise kann der jeweilige Verkehrsfluss, also das Vorfahrtsverhalten für den Bereich, besonders zuverlässig aus den Umgebungsdaten bestimmt werden.

In vorteilhafter Ausgestaltung der vorliegenden Erfindung werden automatisch eine jeweilige geographische Position für die Bereiche bestimmt und die bestimmten Vorfahrtsregeln in Abhängigkeit von den bestimmten Positionen automatisch als Datenschicht in eine Karte eingebunden. Mit anderen Worten werden die bestimmten Vorfahrtsregeln also geographischen oder räumlichen Daten durch Verknüpfung mit den bestimmten geographischen Positionen der Bereiche, für die die Vorfahrtsregeln ermittelt worden sind, zugeordnet. Die Karte ist dabei im herkömmlichen Sinne als Datensatz zu verstehen, der eine räumliche Anordnung physischer Merkmale, insbesondere einen Straßenverlauf, für ein Gebiet angibt, welches signifikant größer ist als jeweils ein einzelner der Bereiche, also der Kreuzungs- oder Einmündungsbereiche, im Sinne der vorliegenden Erfindung. Das Einbinden der bestimmten Vorfahrtsregeln in die Karte als Datenschicht ermöglicht dabei vorteilhaft eine standardisierte Handhabung dieser zusätzlichen oder ergänzenden Datenschicht. Da zudem in einer Vielzahl heutiger Kraftfahrzeuge und in allen autonomen Kraftfahrzeugen eine Karte, also ein Kartendatensatz, ohnehin vorhanden ist, wird so eine besonders einfache Aktualisierung dieser ohnehin vorhandenen Karten oder Navigationsdatensätze ermöglicht.

In vorteilhafter Ausgestaltung der vorliegenden Erfindung wird mittels der jeweiligen Umgebungssensorik eine in dem jeweiligen Bereich vorhandene Straßenausstattung, insbesondere ein Verkehrszeichen, eine Lichtsignalanlage und/oder eine Fahrbahnmarkierung, erfasst. Die erfassten Straßenausstattungen werden dann beim Bestimmen der Vorfahrtsregeln automatisch berücksichtigt. Mit anderen Worten werden die Vorfahrtsregeln also in Abhängigkeit von der jeweiligen Straßenausstattung bestimmt. Durch das Berücksichtigen der gegebenenfalls vorhandenen Straßenausstattung kann die jeweilige Vorfahrtsregel vorteilhaft besonders zuverlässig korrekt bestimmt werden. Beispielsweise kann sich eine bestimmte Verkehrssituation in einem Bereich auf eine bestimmte Weise entwickeln oder entfalten, welche konsistent wäre mit zwei unterschiedlichen Vorfahrtsregeln für diesen Bereich. Es kann beispielsweise aus den Umgebungsdaten bestimmt werden, dass ein anderer Verkehrsteilnehmer, der sich auf einer von rechts einmündenden Straße nähert, den jeweiligen Bereich zuerst durchfährt. Dies kann darauf zurückzuführen sein, dass für den jeweiligen Bereich die Vorfahrtsregel "rechts vor links" gilt oder darauf, dass die von rechts einmündenden Straße als Vorfahrtsstraße deklariert ist, was beispielsweise durch das Verkehrszeichen Nr. 301 (Vorfahrt) oder durch das Verkehrszeichen Nr. 306 (Vorfahrtstraße) angezeigt sein kann, die dann als Teil der Straßenausstattung erfasst werden können. Zusätzlich oder alternativ kann beispielsweise ein Zusatzschild vorhanden sein, welches eine abknickende Vorfahrtsstraße anzeigt. Durch das automatische Erfassen und Berücksichtigen dieser Verkehrszeichen, also der jeweiligen Straßenausstattung, kann also die jeweils zutreffende Vorfahrtsregel eindeutig ausgewählt und bestimmt werden. Ebenso kann die Straßenausstattung beispielsweise erfasst und ausgewertet werden, um zu bestimmen, ob das bestimmte Vorfahrtsverhalten konsistent ist mit der erfassten Straßenausstattung. So kann beispielsweise vermieden werden, dass Situationen, in denen ein Fahrer oder Verkehrsteilnehmer beispielsweise auf sein regelgemäßes Vorfahrtsrecht verzichtet, dazu führen, dass für den jeweiligen Bereich eine falsche Vorfahrtsregel bestimmt wird. Dazu kann bei einer automatischen erkannten Inkonsistenz oder Diskrepanz zwischen dem bestimmten Vorfahrtsverhalten und der Straßenausstattung ein zugeordneter Konfidenzwert reduziert werden. Die jeweilige Straßenausstattung kann beispielsweise ebenfalls mittels der Umgebungssensorik erfasst, also aus den Umgebungsdaten bestimmt werden. Zusätzlich oder alternativ kann die Straßenausstattung beispielsweise aus einer oder mehreren anderen Datenquellen abgerufen werden. Eine solche Datenquelle kann beispielsweise eine entsprechende Datenschicht der Karte sein.

In vorteilhafter Ausgestaltung der vorliegenden Erfindung wird automatisch eine Art des jeweiligen anderen Verkehrsteilnehmers bestimmt und beim Bestimmen der Vorfahrtsregeln berücksichtigt. Mit anderen Worten können die Vorfahrtsregeln also in Abhängigkeit von der Art oder von einem Typ des jeweiligen anderen Verkehrsteilnehmers bestimmt werden. Die Vorfahrtsregeln können also spezifisch für beispielsweise jeweils eine Art oder einen Typ oder eine Kombination von Arten oder Typen aller an der jeweiligen Verkehrssituation beteiligten Verkehrsteilnehmer bestimmt werden. Dazu können die anderen Verkehrsteilnehmer durch entsprechendes Verarbeiten der Umgebungsdaten automatisch hinsichtlich ihrer Art oder ihres Typs klassifiziert werden, beispielsweise als Fußgänger, als Fahrradfahrer, als Kraftfahrzeug oder dergleichen mehr. Dazu kann beispielsweise ein Bildverarbeitungs- und/oder Objekterkennungsalgorithmus verwendet werden. Hierdurch lassen sich auch komplexe Vorfahrtsregeln erkennen und bestimmen. Beispielsweise kann von der von dem Kraftfahrzeug befahrenen ersten Straße nach rechts eine von der ersten Straße weg führende Einbahnstraße abzweigen, welche jedoch in Gegenrichtung von Fahrradfahrern befahren werden darf. Ein dann sich aus der abzweigenden Einbahnstraße entgegen der für Kraftfahrzeuge zulässigen Fahrtrichtung der ersten Straße nähernder Fahrradfahrer kann dann gemäß der "rechts vor links"-Regel Vorfahrt vor dem Kraftfahrzeug haben. Dies ist in dieser Situation jedoch spezifisch für Fahrradfahrer gültig, also nur für eine bestimmte Art von Verkehrsteilnehmern. Ebenso kann durch Berücksichtigen der Art des anderen Verkehrsteilnehmers beispielsweise automatisch die Regel ermittelt, also bestimmt werden, dass an einem Fußgängerüberweg beziehungsweise Fußgängerübergang (Zebrastreifen) Fußgänger absoluten Vorrang vor Kraftfahrzeugen haben, dies jedoch nicht für Fahrradfahrer gilt, die auf ihrem Fahrrad fahren anstatt dieses zu schieben.

In vorteilhafter Ausgestaltung der vorliegenden Erfindung wird mittels einer jeweiligen Insassenüberwachungseinrichtung des jeweiligen Kraftfahrzeugs ein Verhalten eines Fahrers des jeweiligen Kraftfahrzeugs, insbesondere eine jeweilige Blickrichtung und/oder eine jeweilige Gestik, erfasst und beim Bestimmen der Vorfahrtsregeln berücksichtigt. Es kommt beispielsweise regelmäßig vor, dass ein Fahrer auf sein ihm gemäß der jeweiligen gültigen Vorfahrtsregel eigentlich zustehendes Vorfahrtsrecht verzichtet und den anderen Verkehrsteilnehmer den jeweiligen Bereich zuerst durchfahren oder durchqueren lässt und dies durch einen Blick in Richtung des jeweiligen anderen Verkehrsteilnehmers und eine entsprechende Aufforderungsgeste anzeigt. Es ist zwar bisher nicht möglich eine Bedeutung oder Intention einer Geste des jeweiligen Fahrers automatisch mit 100-prozentiger Sicherheit zu bestimmen, dennoch kann sofern eine entsprechende Geste erfasst wird, vorteilhaft beispielsweise ein Konfidenzwert der aus dem jeweiligen Vorfahrtsverhalten bestimmten Vorfahrtsregel reduziert werden. Hierdurch kann vorteilhaft die Zuverlässigkeit und Genauigkeit der bestimmten Vorfahrtsregeln erhöht werden. Im Allgemeinen kann also das mittels der Insassenüberwachungseinrichtung erfasste Verhalten des jeweiligen Fahrers automatisch als Indiz dafür herangezogen werden, ob es sich bei dem automatisch bestimmten Vorfahrtsverhalten um eine Standardsituation handelt oder eine besondere oder außergewöhnliche Situation vorliegt. Vorteilhaft können dazu beispielsweise mehrere vorgegebene Gesten, Gestenarten und/oder Eigenschaften oder Charakterisierungen typischer Gesten, die ein Gewähren der Vorfahrt oder einen Verzichten auf die eigene Vorfahrt anzeigen können, in einer entsprechenden Datenbank vorgegeben sein und dann mit der jeweiligen erfassten Geste verglichen werden. Ebenso kann vorteilhaft beispielsweise eine Methode des maschinellen Lernens verwendet werden, um das Verhalten des jeweiligen Fahrers zu lernen, sodass dann fahrerspezifisch das jeweilige Verhalten besonders genau und zuverlässig in seiner Bedeutung erfasst und für das Bestimmen der Vorfahrtsregeln entsprechend berücksichtigt werden kann.

In vorteilhafter Ausgestaltung der vorliegenden Erfindung wird das wenigstens eine zu führende Kraftfahrzeug in einem zumindest teilautomatisierten Fahrbetrieb automatisch in Abhängigkeit von den bestimmten Vorfahrtsregeln durch die Bereiche, für die die Vorfahrtsregeln bestimmt worden sind, gesteuert. Dieser Fahrbetrieb kann also ein teil-, hoch- oder vollautomatisiertes oder fahrerloses oder autonomes Fahren sein, beispielsweise gemäß dem entsprechenden bekannten fünfstufigen System. Das wenigstens eine zu führende Kraftfahrzeug ist dasjenige Kraftfahrzeug, dessen Führen oder Führung durch das erfindungsgemäße Verfahren unterstützt wird. Grundsätzlich könnte ein autonomes Kraftfahrzeug jede Verkehrssituation anhand jeweils aktuell erfasster Umgebungsdaten individuell und neu bewerten, um eine Fahrstrategie zu bestimmen. Das Steuern oder Betreiben des Kraftfahrzeugs in dem zumindest teilautomatisierten Fahrbetrieb in Abhängigkeit von den bestimmten Vorfahrtsregeln kann vorteilhaft ein Verhalten des jeweiligen autonomen Kraftfahrzeugs aber beispielsweise für andere Verkehrsteilnehmer besser vorhersehbar und einschätzbar machen. Dadurch kann vorteilhaft ein flüssigerer und sicherer Verkehrsfluss erreicht werden.

Außer dem erfindungsgemäßen Verfahren ist ein weiterer Aspekt der vorliegenden Erfindung ein Assistenzsystem zum Unterstützen eines Führens des Kraftfahrzeugs. Das erfindungsgemäße Assistenzsystem weist eine Datenverarbeitungseinrichtung auf, welche ihrerseits eine Kommunikationsschnittstelle aufweist und dazu eingerichtet ist, über die Kommunikationsschnittstelle mittels einer Umgebungssensorik erfasste Umgebungsdaten, die eine Verkehrssituation in einer Umgebung des Kraftfahrzeugs charakterisieren, zu empfangen. Erfindungsgemäß ist das Assistenzsystem, insbesondere die Datenverarbeitungseinrichtung, dazu eingerichtet, aus den empfangenen Umgebungsdaten für einen Bereich, in dem eine von dem Kraftfahrzeug befahrene erste Straße mit einer zweiten Straße, auf der sich ein anderer Verkehrsteilnehmer befindet, zusammentrifft, zu bestimmen, ob das Kraftfahrzeug dem anderen Verkehrsteilnehmer Vorfahrt gewährt, sodass dieser den Bereich vor dem Kraftfahrzeug durchquert, oder umgekehrt. Weiterhin ist das erfindungsgemäße Assistenzsystem, insbesondere die Datenverarbeitungseinrichtung, dazu eingerichtet, daraus automatisch eine Vorfahrtsregel für den jeweiligen Bereich zu bestimmen und zum Unterstützen des Führens des Kraftfahrzeugs bereitzustellen. Dazu kann das Assistenzsystem einen Datenspeicher umfassen, in dem ein Programmcode abgelegt ist, der die Verfahrensschritte des erfindungsgemäßen Verfahrens kodiert oder repräsentiert. Weiterhin kann die Datenverarbeitungseinrichtung eine mit diesem Datenspeicher gekoppelte Prozessoreinrichtung zum Ausführen dieses Programmcodes umfassen.

Mit anderen Worten ist das erfindungsgemäße Assistenzsystem also zum Ausführen oder Durchführen zumindest einer Variante des erfindungsgemäßen Verfahrens eingerichtet. Dementsprechend können die im Zusammenhang mit dem erfindungsgemäßen Verfahren genannten Bauteile und Einrichtungen insbesondere die entsprechenden Bauteile und Einrichtungen des erfindungsgemäßen Assistenzsystems sein. Das erfindungsgemäße Assistenzsystem kann die genannte zentrale Servereinrichtung umfassen. Die zentrale Servereinrichtung kann dann die Datenverarbeitungseinrichtung sein. Ebenso kann die Datenverarbeitungseinrichtung ein Teil der zentralen Servereinrichtung sein oder umgekehrt. Ebenso kann die Datenverarbeitungseinrichtung jedoch beispielsweise vollständig fahrzeugseitig vorgesehen sein. Das erfindungsgemäße Assistenzsystem ist dann also eine Einrichtung für das jeweilige Kraftfahrzeug. Das erfindungsgemäße Assistenzsystem kann weitere Bauteile oder Einrichtungen umfassen, beispielsweise die Umgebungssensorik, die Insassenüberwachungseinrichtung, eine Einrichtung zum Durchführen des genannten maschinellen Lernens, eine Sensorik zum Erfassen und Nachverfolgen der Eigenbewegung des Kraftfahrzeugs, zum Bestimmen der jeweiligen geographischen Position der jeweiligen Bereiche und/oder dergleichen mehr.

Ein weiterer Aspekt der vorliegenden Erfindung ist ein Kraftfahrzeug mit einem erfindungsgemäßen Assistenzsystem. Das erfindungsgemäße Kraftfahrzeug kann also zum Ausführen oder Durchführen zumindest einer Variante des erfindungsgemäßen Verfahrens eingerichtet sein. Insbesondere kann das erfindungsgemäße Kraftfahrzeug das im Zusammenhang mit dem erfindungsgemäßen Verfahren und/oder im Zusammenhang mit dem erfindungsgemäßen Assistenzsystem genannte Kraftfahrzeug sein.

Zu der Erfindung gehören auch Weiterbildungen des erfindungsgemäßen Assistenzsystems und des erfindungsgemäßen Kraftfahrzeugs, die Merkmale aufweisen, wie sie im Zusammenhang mit den Weiterbildungen des erfindungsgemäßen Verfahrens beschrieben sind und umgekehrt. Um unnötige Redundanz zu vermeiden, sind die entsprechenden Weiterbildungen hier nicht noch einmal explizit für alle Aspekte der Erfindung separat beschrieben.

Im Folgenden ist ein Ausführungsbeispiel der Erfindung beschrieben. Hierzu zeigt:
- Fig. 1: eine schematische Übersicht einer beispielhaften Verkehrssituation mit einem Einmündungsbereich, in dem mehreren Verkehrsteilnehmern zusammentreffen; und
- Fig. 2: einen beispielhaften schematischen Ablaufplan eines Verfahrens zum Unterstützen eines Führens eines Kraftfahrzeug.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

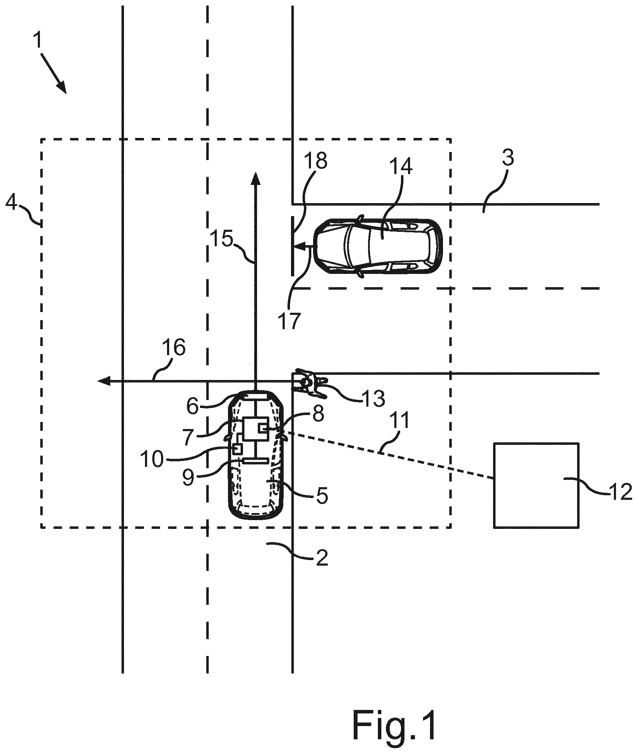

Fig. 1 zeigt eine schematische Übersicht einer beispielhaften Verkehrssituation 1. Konkret ist eine erste Straße 2 dargestellt, in die eine zweite Straße 3 einmündet. Schematisch angedeutet ist hier ein unmittelbarer Einmündungsbereich 4, in dem sich die aktuell dargestellte Verkehrssituation 1 abspielt. Vorliegend befindet sich auf der ersten Straße 2 ein Kraftfahrzeug 5. Das Kraftfahrzeug 5 weist eine Umgebungssensorik 6, eine mit dieser gekoppelte Datenverarbeitungseinrichtung 7, welche ein Kommunikationsmodul 8 umfasst, ein mit der Datenverarbeitungseinrichtung 7 verbundenes Navigationsgerät 9 und eine ebenfalls mit der Datenverarbeitungseinrichtung 7 verbundene Insassenüberwachungseinrichtung 10 auf.

Die Datenverarbeitungseinrichtung 7 ist dazu eingerichtet mittels des Kommunikationsmoduls 8 über eine - hier schematisch angedeutete bidirektionale kabellose Datenverbindung 11 - mit einem fahrzeugexternen Server 12 zu kommunizieren.

In dem Einmündungsbereich 4 befinden sich als weitere Verkehrsteilnehmer vorliegend ein Fußgänger 13 und ein auf der zweiten Straße 3 befindliches Fremdfahrzeug 14.

Eine Dynamik der Verkehrssituation 1 ist hier durch entsprechende Pfeile angedeutet. Durch einen ersten Pfeil ist ein Pfad 15 des Kraftfahrzeugs 5, durch einen zweiten Pfeil ein Pfad 16 des Fußgängers 13 und durch einen dritten Pfeil ein Pfad 17 des Fremdfahrzeugs 14 angedeutet. Das Kraftfahrzeug 5 möchte also den Einmündungsbereich 4 auf der ersten Straße 2 entlang des Pfades 15 durchfahren. Der Fußgänger 13 möchte aus der zweiten Straße 3 kommend die erste Straße 2 entlang des Pfades 16 überqueren. Das Fremdfahrzeug 14 fährt entlang des Pfades 17 auf der zweiten Straße 3 bis zu einer Haltelinie 18, welche angibt, wo die zweite Straße 3 mit der ersten Straße 2 zusammentrifft.

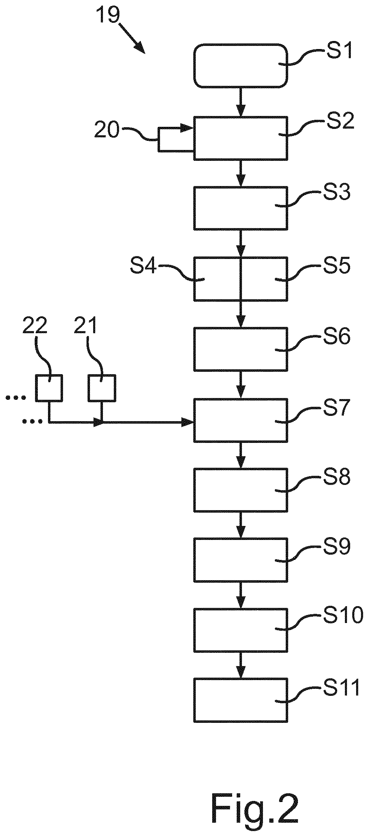

Fig. 2 zeigt einen beispielhaften schematischen Ablaufplan 19 eines Verfahrens zum Unterstützen eines Führens eines Kraftfahrzeugs, insbesondere des Kraftfahrzeugs 5. Dieses Verfahren, also der Ablaufplan 19 soll im Folgenden unter Bezugnahme auf Fig. 1 erläutert werden.

Das Verfahren beginnt mit einem Verfahrensschritt S1. Hier wird ein Assistenzsystem des Kraftfahrzeugs 5 aktiviert. Dieses Assistenzsystem umfasst vorliegend die Umgebungssensorik 6, die Datenverarbeitungseinrichtung 7, die Insassenüberwachungseinrichtung 10 und das Navigationsgerät 9.

In einem Verfahrensschritt S2 fährt das Kraftfahrzeug 5 entlang der Straße 2, wobei kontinuierlich mittels der Umgebungssensorik 6 Umgebungsdaten, einschließlich einer Straßenausstattung im Bereich der ersten Straße 2, erfasst werden. Als Straßenausstattung wird hier etwa die Haltelinie 18 erfasst. Dieses kontinuierliche Erfassen der Umgebungsdaten ist hier schematisch durch einen Schleifenpfad 20 angedeutet und kann auch während der nachfolgenden Verfahrensschritte durchgeführt werden.

In einem Verfahrensschritt S3 gelangt das Kraftfahrzeug 5 in den Einmündungsbereich 4, also in die in Fig. 1 dargestellte Verkehrssituation 1. Durch Verarbeiten der kontinuierlich erfassten Umgebungsdaten durch die Datenverarbeitungseinrichtung 7 wird der Einmündungsbereich 4 automatisch erkannt.

Anders als hier beispielhaft dargestellt, können die Verfahrensschritt S2 und S3 ebenso im Wesentlichen in umgekehrter Reihenfolge durchgeführt werden. So könnte nach dem Verfahrensschritt S1 zunächst - beispielsweise anhand von vorhandenen Kartendaten und einer kontinuierlich bestimmten Position des Kraftfahrzeugs 5 - automatisch erkannt werden, dass das Kraftfahrzeug 5 den Einmündungsbereich 4 erreicht hat und dann das automatische Erfassen der Umgebungsdaten für diesen Einmündungsbereich 4 aktiviert werden.

In einem Verfahrensschritt S4 werden durch Verarbeiten der Umgebungsdaten die anderen in dem Einmündungsbereich 4 befindlichen Verkehrsteilnehmer, hier also der Fußgänger 13 und das Fremdfahrzeug 14, einschließlich deren jeweiliger Art und ihrem jeweiligen Bewegungsverhalten erfasst. Hier wird also automatisch bestimmt, wo in dem Einmündungsbereich 4 sich welche Arten von Verkehrsteilnehmern befinden, ob diese in Ruhe sind oder sich bewegen und gegebenenfalls in welcher Richtung oder entlang welcher Trajektorie sie sich bewegen. Dabei kann eine jeweilige aus mehreren erfassten Positionen bestimmte Trajektorie insbesondere extrapoliert werden, um eine jeweilige voraussichtliche Bewegung zu ermitteln. Die Positionen und Bewegungen der anderen Verkehrsteilnehmer werden dabei insbesondere relativ zu dem Kraftfahrzeug 5 bestimmt. Vorliegend werden die Positionen und Bewegungen des Kraftfahrzeugs 5, des Fußgängers 13 und des Fremdfahrzeugs 14 insbesondere in Bezug auf den Einmündungsbereich 4 bestimmt. Parallel wird in einem Verfahrensschritt S5 ein Fahrerverhalten eines Fahrers des Kraftfahrzeugs 5 mittels der Insassenüberwachungseinrichtung 10 überwacht, insbesondere auf eine Blickrichtung und eine Gestik hin, welche als Kommunikation mit dem Fußgänger 13 und/oder mit einem Fahrer des Fremdfahrzeugs 14 interpretiert werden kann.

In einem Verfahrensschritt S6 hat sich die Verkehrssituation 1 über die in Fig. 1 dargestellte Momentaufnahme hinaus dynamisch entwickelt und aus den bestimmten Positionen und Bewegungen wird ein Vorfahrtsverhalten für den Einmündungsbereich 4 bestimmt. Konkret hat im vorliegenden Beispiel das Kraftfahrzeug 5 zunächst in der in Fig. 1 gezeigten Stellung angehalten, wobei der Fahrer dem Fußgänger 13 durch eine entsprechende Gestik zu verstehen gegeben hat, dass dieser die erste Straße 2 entlang des Pfades 16 vor dem Kraftfahrzeug 5 überqueren darf. Gleichzeitig ist das Fremdfahrzeug 14 an der Haltelinie 18 zum Stillstand gekommen. Anschließend hat das Kraftfahrzeug 5 den Einmündungsbereich 4 entlang des Pfades 15 vor dem Fremdfahrzeug 14 durchquert.

In einem Verfahrensschritt S7 übermittelt das Kraftfahrzeug 5 über die Datenverbindung 11 dass für den Einmündungsbereich 4 bestimmte Vorfahrtsverhalten gemeinsam mit dessen geographischer Position, einem Hinweis auf die erfasste Gestik des Fahrers des Kraftfahrzeugs 5 - beispielsweise in Form eines reduzierten Konfidenzwertes - und mit einer erfassten Straßenausstattung des Einmündungsbereiche 4, vorliegend der Haltelinie 18, an den Server 12. Die bisherigen Verfahrensschritte werden in ähnlicher Weise wie für den Einmündungsbereich 4 auch für andere, hier nicht näher dargestellte Verkehrssituationen mit jeweils anderen Verkehrsteilnehmern insgesamt mehrfach durchgeführt. Das Kraftfahrzeug 5 und die diesem in den anderen Verkehrssituationen entsprechenden Kraftfahrzeuge bilden dabei einen Schwarm von Kraftfahrzeugen, der hier schematisch angedeutet entsprechende Schwarmdaten 21, 22 an den Server 12 übermittelt. Die Schwarmdaten 21, 22 entsprechen dabei den von den anderen Kraftfahrzeugen des Schwarms übermittelten Vorfahrtsverhalten, Positionen, Straßenausstattungen, Arten der jeweils beteiligten Verkehrsteilnehmer usw., wie sie auch das Kraftfahrzeug 5 in der beschriebenen Weise an den Server 12 übermittelt hat.

In einem Verfahrensschritt S8 verarbeitet der Server 12 die von dem Kraftfahrzeug 5 übermittelten Daten und die Schwarmdaten 21, 22 und bestimmt daraus eine für den Einmündungsbereich 4 gültige Vorfahrtsregel. Je nach Arten der beteiligten Verkehrsteilnehmer kann der Server 12 dabei für den Einmündungsbereich 4 ebenso mehrere Vorfahrtsregeln für spezifische Arten von Verkehrsteilnehmern oder Kombinationen von Verkehrsteilnehmern, die in dem Einmündungsbereich 4 aufeinandertreffen, bestimmen. Vorliegend wird für den Einmündungsbereich 4 unter Berücksichtigung der Gestik des Fahrers des Kraftfahrzeugs 5, die dem Überqueren der ersten Straße 2 durch den Fußgänger 13 vorausging, und unter Berücksichtigung der Haltelinie 18 als Vorfahrtsregel für den Einmündungsbereich 4 bestimmt, dass auf der ersten Straße 2 fahrende Kraftfahrzeuge Vorfahrt vor sich der ersten Straße 2 auf der einmündenden zweiten Straße 3 nähernden Kraftfahrzeugen haben.

In einem Verfahrensschritt S9 erzeugt der Server 12 aus der für den Einmündungsbereich 4 bestimmten Vorfahrtsregel und der geographischen Position des Einmündungsbereiches 4 ebenso wie für weitere Vorfahrtsregeln und Positionen hier nicht dargestellter Kreuzungs- oder Einmündungsbereiche eine Datenschicht für eine Karte und bindet diese Datenschicht in die Karte, also in einen Kartendatensatz ein.

In einem Verfahrensschritt S10 wird die erzeugte Datenschicht, der komplette Kartendatensatz oder eine jeweilige Veränderung, die sich gegenüber einer vorherigen Durchführung des Verfahrens ergeben hat, an das Kraftfahrzeug 5 übermittelt.

In einem Verfahrensschritt S11 wird die Datenschicht, werden also die bestimmten Vorfahrtsregeln, in dem Kraftfahrzeug 5 mittels des Navigationsgerätes 9 als Teil einer Navigationskarte angezeigt, um den Fahrer beim Führen des Kraftfahrzeugs 5 zu unterstützen, wenn dieser den Einmündungsbereich 4 oder einen der anderen Bereiche, für die eine jeweilige Vorfahrtsregeln bestimmt wurde, erreicht. Ebenso kann in dem Verfahrensschritt S11 das Kraftfahrzeug 5 nunmehr bei einem erneuten Erreichen und Durchqueren des Einmündungsbereiche 4 oder beim Erreichen und Durchqueren eines der anderen Bereiche in einem autonomen Fahrbetrieb auf die bestimmten Vorfahrtsregeln als unterstützende Daten zurückgreifen.

Insgesamt zeigen die beschriebenen Beispiele, wie durch die Erfindung, ein besonders sicheres und zuverlässiges Führen eines Kraftfahrzeugs ermöglicht werden kann.

### Bezugszeichenliste

- 1: Verkehrssituation
- 2: erste Straße
- 3: zweite Straße
- 4: Einmündungsbereich
- 5: Kraftfahrzeug
- 6: Umgebungssensorik
- 7: Datenverarbeitungseinrichtung
- 8: Kommunikationsmodul
- 9: Navigationsgerät
- 10: Insassenüberwachungseinrichtung
- 11: Datenverbindung
- 12: Server
- 13: Fußgänger
- 14: Fremdfahrzeug
- 15: Pfad (des Kraftfahrzeugs 5)
- 16: Pfad (des Fußgängers 13)
- 17: Pfad (des Fremdfahrzeugs 14)
- 18: Haltelinie
- 19: Ablaufplan
- 20: Schleifenpfad
- 21, 22: Schwarmdaten
- S1 - S11: Verfahrensschritte

## Patentansprüche

1. Verfahren (19) zum Unterstützen eines Führens wenigstens eines Kraftfahrzeugs (5), bei dem
- mittels einer jeweiligen Umgebungssensorik (6) einer Vielzahl von Kraftfahrzeugen (5) jeweilige Umgebungsdaten erfasst werden, die eine jeweilige umgebende Verkehrssituation (1) charakterisieren,
wobei
- die Umgebungsdaten automatisch in Bereichen (4) erfasst werden, in denen eine jeweilige von dem jeweiligen Kraftfahrzeug (5) befahrene erste Straße (2) und eine jeweilige zweite Straße (3), auf der sich ein jeweiliger anderer Verkehrsteilnehmer (13, 14) befindet, zusammentreffen,
**dadurch gekennzeichnet, dass**
- die Vielzahl von Kraftfahrzeugen (5) unabhängig voneinander agieren, aber dennoch zusammenfassend als Flotte oder Schwarm bezeichnet werden,
- aus den erfassten Umgebungsdaten für die Bereiche (4) automatisch als ein jeweiliges Vorfahrtsverhalten bestimmt wird, ob das jeweilige Kraftfahrzeug (5) dem jeweiligen anderen Verkehrsteilnehmer (13, 14) Vorfahrt gewährt, sodass dieser den jeweiligen Bereich (4) vor dem jeweiligen Kraftfahrzeug (5) durchquert, oder umgekehrt, und
- aus der Vielzahl von bestimmten Vorfahrtsverhalten automatisch Vorfahrtsregeln für die Bereiche (4) bestimmt werden, wobei die bestimmten Vorfahrtsregeln in dem wenigstens einen zu führenden Kraftfahrzeug (5) bereitgestellt werden.

2. Verfahren nach Anspruch 1, wobei die Vorfahrtsregeln mittels einer jeweiligen Datenverarbeitungseinrichtung (7) lokal in zumindest einem der Kraftfahrzeuge (5), welches die jeweiligen Umgebungsdaten erfasst hat, bestimmt und dann von diesem Kraftfahrzeug (5) automatisch an eine fahrzeugexterne Servereinrichtung übermittelt werden.

3. Verfahren nach Anspruch 1, wobei die Umgebungsdaten und/oder die bestimmten Vorfahrtsverhalten von den Kraftfahrzeugen (5) automatisch an eine zentrale Servereinrichtung (12) übermittelt werden, welche daraus die Vorfahrtsregeln bestimmt.

4. Verfahren (19) nach einem der vorhergehenden Ansprüche, wobei zum Bestimmen des jeweiligen Vorfahrtsverhaltens jeweils eine Eigenbewegung des jeweiligen Kraftfahrzeugs (5) und eine Bewegung des jeweiligen anderen Verkehrsteilnehmers (13, 14) in dem jeweiligen Bereich erfasst und nachverfolgt werden.

5. Verfahren (19) nach einem der vorhergehenden Ansprüche, wobei automatisch eine jeweilige geographische Position für die Bereiche (4) bestimmt und die bestimmten Vorfahrtsregeln in Abhängigkeit von den bestimmten Positionen automatisch als Datenschicht in eine Karte eingebunden werden.

6. Verfahren (19) nach einem der vorhergehenden Ansprüche, wobei mittels der jeweiligen Umgebungssensorik (6) eine in dem jeweiligen Bereich (4) vorhandene Straßenausstattung (18), insbesondere ein Verkehrszeichen, eine Lichtsignalanlage und/oder eine Fahrbahnmarkierung (18), erfasst wird und die erfassten Straßenausstattungen (18) beim Bestimmen der Vorfahrtsregeln berücksichtigt werden.

7. Verfahren (19) nach einem der vorhergehenden Ansprüche, wobei automatisch eine Art des jeweiligen anderen Verkehrsteilnehmers (13, 14) bestimmt und beim Bestimmen der Vorfahrtsregeln berücksichtigt wird.

8. Verfahren (19) nach einem der vorhergehenden Ansprüche, wobei mittels einer jeweiligen Insassenüberwachungseinrichtung (10) des jeweiligen Kraftfahrzeugs (5) ein Verhalten eines Fahrers des jeweiligen Kraftfahrzeugs (5), insbesondere eine jeweilige Blickrichtung und/oder eine jeweilige Gestik, erfasst und beim Bestimmen der Vorfahrtsregeln berücksichtigt wird.

9. Verfahren (19) nach einem der vorhergehenden Ansprüche, wobei das wenigstens eine zu führende Kraftfahrzeug (5) in einem zumindest teilautomatisierten Fahrbetrieb automatisch in Abhängigkeit von den bestimmten Vorfahrtsregeln durch die Bereiche (4), für die die Vorfahrtsregeln bestimmt worden sind, gesteuert wird.

10. Assistenzsystem zum Unterstützen eines Führens des Kraftfahrzeugs (5), mit einer Datenverarbeitungseinrichtung (7), welche eine Kommunikationsschnittstelle (8) aufweist und dazu eingerichtet ist, über die Kommunikationsschnittstelle (8) mittels einer Umgebungssensorik (6) erfasste Umgebungsdaten, die eine Verkehrssituation (1) in einer Umgebung (4) des Kraftfahrzeugs (5) charakterisieren, zu empfangen, wobei das Assistenzsystem zum Ausführen oder Durchführen zumindest einer Variante eines Verfahrens nach einem der vorhergehenden Ansprüche eingerichtet ist,
**dadurch gekennzeichnet, dass**
die Datenverarbeitungseinrichtung (7) dazu eingerichtet ist,
- aus den empfangenen Umgebungsdaten für einen Bereich (4), in dem eine von dem Kraftfahrzeug (5) befahrene erste Straße (2) mit einer zweiten Straße (3), auf der sich ein anderer Verkehrsteilnehmer (13, 14) befindet, zusammentrifft, zu bestimmen, ob das Kraftfahrzeug (5) dem anderen Verkehrsteilnehmer (13, 14) Vorfahrt gewährt, sodass dieser den Bereich (4) vor dem Kraftfahrzeug (5) durchquert, oder umgekehrt, und
- daraus automatisch eine Vorfahrtsregel für den Bereich (4) zu bestimmen und zum Unterstützen des Führens des Kraftfahrzeugs (5) bereitzustellen.

11. Kraftfahrzeug (5) mit einem Assistenzsystem nach Anspruch 10.

## Claims

1. Method (19) for assisting driving of at least one motor vehicle (5), in which
- by means of a respective environmental sensor system (6) of a plurality of motor vehicles (5), respective environment data are detected that characterize a respective ambient traffic situation (1), wherein
- the environment data are automatically detected in regions (4) in which a respective first road (2) traveled by the respective motor vehicle (5), and a respective second road (3) on which a respective other road user (13, 14) is located, meet,
**characterized in that**
- the plurality of motor vehicles (5) act independently of one another, but nevertheless is collectively referred to as a fleet or swarm,
- from the detected environment data for the regions (4), it is automatically determined, as a respective right-of-way behavior, whether the respective motor vehicle (5) grants the respective other road user (13, 14) right-of-way, so that said road user (13, 14) traverses the respective region (4) in front of the respective motor vehicle (5), or vice versa, and
- from the plurality of determined right-of-way behaviors, right-of-way rules for the regions (4) are automatically determined, wherein the determined right-of-way rules are provided in the at least one motor vehicle (5) to be driven.

2. Method in accordance with claim 1, wherein the right-of-way rules are determined locally, by means of a respective data processing device (7), in at least one of the motor vehicles (5) that has detected the respective environment data, and are then automatically transmitted from this motor vehicle (5) to a vehicle-external server device.

3. The method in accordance with claim 1, wherein the environment data and/or the determined right-of-way behavior are automatically transmitted from the motor vehicles (5) to a central server device (12), which determines therefrom the right-of-way rules.

4. Method (19) in accordance with any one of the preceding claims, wherein a respective intrinsic movement of the respective motor vehicle (5) and a movement of the respective other road user (13, 14) in the respective region are detected and tracked in order to determine the respective right-of-way behavior.

5. Method (19) in accordance with any one of the preceding claims, wherein a respective geographical position for the regions (4) is automatically determined, and the determined right-of-way rules are automatically integrated as a data layer into a map depending on the determined positions.

6. Method (19) in accordance with any one of the preceding claims, wherein a road equipment (18), in particular a traffic sign, a light signal system, and/or a road marker (18), which is present in the respective region (4) is detected by means of the respective environmental sensor system (6), and the detected road equipment (18) is taken into account in determining the right-of-way rules.

7. Method (19) in accordance with any one of the preceding claims, wherein a type of the respective other road user (13, 14) is automatically determined and taken into account in determining the right-of-way rules.

8. Method (19) in accordance with any one of the preceding claims, wherein a behavior of a driver of the respective motor vehicle (5), in particular a respective gaze direction and/or a respective gesture, is detected by means of a respective occupant monitoring device (10) of the respective motor vehicle (5) and is taken into account in determining the right-of-way rules.

9. Method (19) in accordance with any one of the preceding claims, wherein the at least one motor vehicle (5) to be driven is, in an at least partially automated driving mode, controlled automatically depending on the determined right-of-way rules through the regions (4) for which the right-of-way rules have been determined.

10. An assistance system for assisting a driving of the motor vehicle (5), having a data processing device (7) which has a communication interface (8) and is configured to receive, via the communication interface (8), environment data that are detected by means of an environment sensor system (6), which environment data characterize a traffic situation (1) in an environment (4) of the motor vehicle (5), wherein the assistance system is designed to execute or perform at least one variant of a method in accordance with any one of the preceding claims,
**characterized in that**
the data processing device (7) is configured to
- determine, from the received environment data for a region (4) in which a first road (2) traveled by the motor vehicle (5) meets a second road (3) on which another road user (13, 14) is located, whether the motor vehicle (5) grants the other road user (13, 14) right-of-way, so that said road user (13, 14) crosses the region (4) in front of the motor vehicle (5), or vice versa, and
- automatically determine therefrom a right-of-way rule for the region (4) and provide said rule to assist the driving of the motor vehicle (5).

11. Motor vehicle (5) having an assistance system in accordance with claim 10.

## Revendications

1. Procédé (19) d'aide à la conduite d'au moins un véhicule automobile (5), dans lequel
- au moyen d'un ensemble de capteurs d'environnement (6) respectif d'une pluralité de véhicules automobiles (5), des données d'environnement respectives sont détectées, qui caractérisent une situation de circulation (1) respective, dans lequel
- les données d'environnement sont détectées automatiquement dans des zones (4), dans lesquelles une première rue (2) respective parcourue par le véhicule automobile (5) respectif et une seconde rue (3) respective, sur laquelle un autre usager de la route respectif (13, 14) se trouve, convergent,
**caractérisé en ce que**
- la pluralité de véhicules automobiles (5) agissent indépendamment l'un de l'autre, mais sont cependant désignés conjointement comme flotte ou groupe,
- à partir des données d'environnement détectées pour les zones (4), il est déterminé automatiquement, en tant que comportement de priorité respectif, si le véhicule automobile (5) respectif laisse la priorité à l'autre usager de la route (13, 14) respectif, de sorte que celui-ci traverse la zone (4) respective avant le véhicule automobile (5) respectif ou inversement et
- à partir de la pluralité de comportements de priorité déterminés, des règles de priorité pour les zones (4) sont déterminées automatiquement, dans lequel les règles de priorité déterminées sont fournies dans l'au moins un véhicule automobile (5) à conduire.

2. Procédé selon la revendication 1, dans lequel les règles de priorité sont déterminées au moyen d'un dispositif de traitement de données (7) respectif localement dans au moins un des véhicules automobiles (5), qui a détecté les données d'environnement respectives, puis sont transmises de ce véhicule automobile (5) automatiquement à un dispositif serveur externe au véhicule.

3. Procédé selon la revendication 1, dans lequel les données d'environnement et/ou les comportements de priorité déterminés sont transmis automatiquement depuis les véhicules automobiles (5) à un dispositif serveur central (12), qui déterminé les règles de priorité à partir de ceux-ci.

4. Procédé (19) selon l'une quelconque des revendications précédentes, dans lequel pour la détermination des comportements de priorité respectifs, respectivement, un déplacement propre du véhicule automobile (5) respectif et un déplacement de l'autre usager de la route (13, 14) respectif sont détectés dans la zone respective et tracés.

5. Procédé (19) selon l'une quelconque des revendications précédentes, dans lequel une position géographique respective pour les zones (4) est automatiquement déterminée et les règles de priorité déterminées en fonction des positions déterminées sont intégrées automatiquement en tant que couche de données dans une carte.

6. Procédé (19) selon l'une quelconque des revendications précédentes, dans lequel, au moyen de l'ensemble de capteurs d'environnement (6) respectif, un équipement routier (18) présent dans la zone (4) respective, en particulier un panneau de signalisation, un feu de signalisation et/ou un marquage routier (18), est détecté et les équipements routiers (18) détectés sont pris en compte lors de la détermination des règles de priorité.

7. Procédé (19) selon l'une quelconque des revendications précédentes, dans lequel un type de l'autre usager de la route (13, 14) respectif est déterminé automatiquement et pris en compte lors de la détermination des règles de priorité.

8. Procédé (19) selon l'une quelconque des revendications précédentes, dans lequel, au moyen d'un dispositif de surveillance de passagers (10) du véhicule automobile (5) respectif, un comportement d'un conducteur du véhicule automobile (5) respectif, en particulier une direction respective du regard et/ou des gestes respectifs, est détecté et pris en compte lors de la détermination des règles de priorité.

9. Procédé (19) selon l'une quelconque des revendications précédentes, dans lequel l'au moins un véhicule automobile (5) à conduire est commandé automatiquement dans un mode de conduite au moins partiellement automatisé en fonction des règles de priorité déterminées à travers les zones (4), pour lesquelles les règles de priorité ont été déterminées.

10. Système d'assistance d'aide à la conduite du véhicule automobile (5), comprenant un dispositif de traitement de données (7), qui présente une interface de communication (8) et qui est conçu pour recevoir, par le biais de l'interface de communication (8), des données d'environnement détectées au moyen d'un ensemble de capteurs d'environnement (6), qui caractérisent une situation de circulation (1) dans un environnement (4) du véhicule automobile (5), dans lequel le système d'assistance est conçu pour réaliser ou exécuter au moins une variante d'un procédé selon une quelconque des revendications précédentes,
**caractérisé en ce que**
le dispositif de traitement de données (7) est conçu pour,
- à partir des données d'environnement reçues pour une zone (4), dans laquelle une première rue (2) parcourue par le véhicule automobile (5) converge avec une seconde rue (3), sur laquelle se trouve un autre usager de la route (13, 14), déterminer si le véhicule automobile (5) laisse la priorité à l'autre usager de la route (13, 14), de sorte que celui-ci traverse la zone (4) avant le véhicule automobile (5) ou inversement et
- à partir de cela, déterminer automatiquement une règle de priorité pour la zone (4) et la fournir pour l'aide à la conduite du véhicule automobile (5).

11. Véhicule automobile (5) comprenant un système d'assistance selon la revendication 10.
